(19) Europäisches Patentamt
European Patent Office
Office européen des brevets

(11) **EP 3 671 062 B1**

(12) **FASCICULE DE BREVET EUROPEEN**

(45) Date de publication et mention
de la délivrance du brevet:
**04.10.2023 Bulletin 2023/40**

(21) Numéro de dépôt: **19217124.7**

(22) Date de dépôt: **17.12.2019**

(51) Classification Internationale des Brevets (IPC):
**F24S 50/80** *(2018.01)* **F24S 30/42** *(2018.01)*
**F24S 40/52** *(2018.01)*

(52) Classification Coopérative des Brevets (CPC):
**F24S 50/80; F24S 30/425; F24S 40/52;**
F24S 50/20; Y02E 10/47; Y02E 10/50

(54) **MODULATION DE LA PUISSANCE GÉNÉRÉE PAR UNE CENTRALE SOLAIRE THERMIQUE**

MODULATION DER DURCH EIN SOLARTHERMISCHES KRAFTWERK ERZEUGTEN LEISTUNG

MODULATION OF THE POWER GENERATED BY A THERMAL SOLAR POWER PLANT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2018 FR 1873691**

(43) Date de publication de la demande:
**24.06.2020 Bulletin 2020/26**

(73) Titulaire: **Newheat
33000 Bordeaux (FR)**

(72) Inventeurs:
• **GONNELLE, Alexis, Jean, Didier
33000 BORDEAUX (FR)**
• **JAFFRE, Damien, Eric
18000 BOURGES (FR)**
• **DELMAS, Pierre, Jacques, Justin
33130 BEGLES (FR)**

(74) Mandataire: **Plasseraud IP
5 Cours de Verdun
33000 Bordeaux (FR)**

(56) Documents cités:
WO-A1-2015/155771    DE-A1- 19 912 007
DE-A1-102006 042 888    DE-A1-102007 044 063
DE-B4-102007 044 063    DE-U1-202014 005 863
FR-A1- 2 910 600    US-A1- 2005 126 560
US-A1- 2012 210 999    US-A1- 2013 048 049

## Description

### Domaine technique

La présente invention concerne un procédé pour moduler la puissance générée par une centrale solaire thermique.

### Technique antérieure

On connait des centrales solaires thermiques installées à proximité d'installations de consommation de chaleur, telles que des sites industriels ou des réseaux de chaleur urbains.

Une centrale comprend une pluralité de panneaux solaires, l'irradiation de la surface des panneaux solaires permettant de chauffer un fluide caloporteur circulant dans un circuit de la centrale de sorte à alimenter en chaleur l'installation.

Toutefois, la puissance thermique pouvant être produite dépend de nombreux facteurs, et notamment de l'ensoleillement disponible en fonction des conditions climatiques. De la même façon, la demande en chaleur de la part de l'installation associée à la centrale peut également varier et être difficilement prévisible.

Ainsi, en fonctionnement nominal, la centrale doit permettre de produire suffisamment de chaleur pour alimenter l'installation sans pour autant dépasser une température limite, dite température cible. Le dépassement de la température cible est sinon susceptible d'entrainer une surchauffe de la centrale.

Une surchauffe peut avoir plusieurs causes, telles que :

- une stagnation du fluide caloporteur dans le circuit de la centrale, par exemple du fait d'une défaillance technique, entrainant alors une brusque augmentation de la température et de la pression ; ou
- une mauvaise adéquation entre la chaleur produite par la centrale et la consommation en chaleur de la part de l'installation. Le phénomène de surchauffe est alors lié à l'incapacité d'évacuer la chaleur produite en excès, ce qui entraine une élévation progressive de la température.

Une surchauffe peut avoir des conséquences néfastes significatives du fait de la pression élevée ou de la température élevée, ou de la combinaison des deux, qui en résultent. Ainsi une surchauffe peut provoquer la dégradation de certains composants de la centrale ou la vaporisation du fluide caloporteur.

Afin de remédier à ce phénomène, on connait des solutions actives ou passives pouvant être mises en oeuvre. Parmi les solutions actives, on connait par exemple l'utilisation d'un élément de stockage de chaleur, ou d'un élément de dissipation de la chaleur produite en excès, par exemple un aérotherme, ou une combinaison de ces éléments.

Parmi les solutions passives, on connait par exemple l'utilisation de soupapes de sécurité intégrées au circuit de la centrale provoquant une vidange en cas de pression élevée induite par la montée en température supérieure à la température cible. Il est également possible de prévoir un agencement et un dimensionnement de la centrale permettant de résister à des pressions plus élevées.

Le document WO2015/155771 décrit un système de chauffage solaire comprenant des moyens de prévention de surchauffe. Plus précisément, un module de prévention de surchauffe comprend un réseau de capteurs qui communique avec un actionneur. Selon le document WO2015/155771, le réseau de capteurs comprennent notamment des capteurs de température du fluide caloporteur, des capteurs d'humidité, capteurs d'orientation. En réponse aux données à la sortie des capteurs, l'actionneur oriente le panneau solaire de manière à moduler la surface effective du panneau solaire exposée au soleil. Les données de sortie des capteurs sont notamment la température du liquide caloporteur, la température du panneau solaire, la température ambiante, l'orientation spatiale du panneau solaire, la vitesse du vent sur le panneau solaire. Le mode de fonctionnement du système est le suivant : lorsque les capteurs mesurent qu'une température maximale du liquide caloporteur est atteinte, l'actionneur oriente le panneau de manière à ajuster la puissance de chauffage. La solution proposée dans le document WO2015/155771 permet d'orienter le panneau solaire afin d'ajuster la puissance de chauffage uniquement à partir des données mesurées en aval du panneau solaire, c'est-à-dire en aval dans la chaîne de transformation de l'énergie solaire en énergie thermique. En d'autres termes, le système connu permet de moduler la puissance de chauffage du panneau solaire uniquement à partir des valeurs de température atteintes dans le liquide caloporteur mesurées par les capteurs installés en aval par rapport au panneau solaire dans le système de chauffage.

Le document FR2910600 décrit un procédé de régulation de la puissance d'une installation de fourniture d'eau chaude.

**Problème technique**

Toutefois, ces solutions, tant actives que passives, sont souvent plus complexes et plus onéreuses à mettre en oeuvre.

La solution proposée dans le document WO2015/155771 n'est pas optimale. En effet, le fait de moduler la puissance de chauffage à partir des données collectées en aval du panneau solaire induit un retard entre le moment où le panneau reçoit l'irradiation et le moment où les capteurs mesurent les effets liés à l'irradiation. Ce retard est lié d'une part à la disposition spatiale des capteurs dans la centrale solaire thermique et d'autre part lié à l'inertie thermique de la centrale solaire thermique. Ainsi, en raison de ce retard, la solution ne permet pas de prévenir et/ou limiter la surchauffe de la centrale de manière robuste et certaine.

La présente invention a notamment pour but de pallier à ces inconvénients.

L'invention vise en particulier à obtenir une centrale pouvant produire une puissance thermique se limitant au niveau de consommation de l'installation à laquelle elle est associée.

L'invention vise également à prévenir et/ou limiter une surchauffe de la centrale en déterminant en amont, par la mesure directe de l'irradiation, la puissance thermique attendue de manière à éviter tout retard entre le moment où on oriente le panneau solaire et le moment où une puissance thermique est effectivement produite. Cela permet de moduler la puissance de manière plus réactive et anticipe l'orientation du panneau avant que l'irradiation produise son effet.

L'invention vise de façon plus générale à produire de la chaleur avec des panneaux solaires de façon simple, flexible et prévisible.

**Exposé de l'invention**

A cet effet, l'invention concerne un procédé pour moduler une puissance générée par une centrale solaire thermique comprenant au moins un panneau solaire, le procédé comprenant les étapes suivantes :

- on dispose d'au moins un panneau solaire comprenant un dispositif de suivi configuré pour faire pivoter le panneau solaire selon au moins une direction de rotation ;
- on dispose d'une installation à fournir en une puissance thermique variable au cours du temps à partir de l'irradiation reçue par le panneau solaire ;
- on détermine un angle d'inclinaison du panneau solaire pour produire la puissance thermique à fournir à l'installation à partir de l'irradiation mesurée en temps réel ; et
- on pivote le panneau solaire avec le dispositif de suivi pour atteindre l'angle d'inclinaison déterminé.

Selon une réalisation, on détermine en temps réel l'angle d'inclinaison du panneau solaire pour produire la puissance thermique à fournir à l'installation dans la limite de la puissance solaire disponible.

Selon une autre réalisation, on pivote de façon continue, notamment au cours d'une journée, le panneau solaire avec le dispositif de suivi pour atteindre l'angle d'inclinaison déterminé.

Selon une autre réalisation, on détermine l'angle d'inclinaison du panneau solaire pour générer une puissance correspondant à la puissance thermique à fournir à l'installation à partir d'une loi de puissance s'écrivant sous la forme :

[Math. 1]

$$P = k_c \cos(\beta) + k_s \sin(\beta) + k_k$$

$k_c$, $k_s$, $k_k$ sont des coefficients indépendants de l'angle d'inclinaison.

Selon une autre réalisation, la centrale solaire thermique comprend un fluide caloporteur configuré pour transporter la puissance thermique à fournir à l'installation, et on pivote le panneau solaire avec le dispositif de suivi de sorte que la température du fluide caloporteur soit maintenue en dessous d'une température cible déterminée.

**Brève description des dessins**

D'autres caractéristiques, détails et avantages de l'invention apparaîtront à la lecture de la description détaillée ci-après, et à l'analyse des dessins annexés, sur lesquels :

Fig. 1

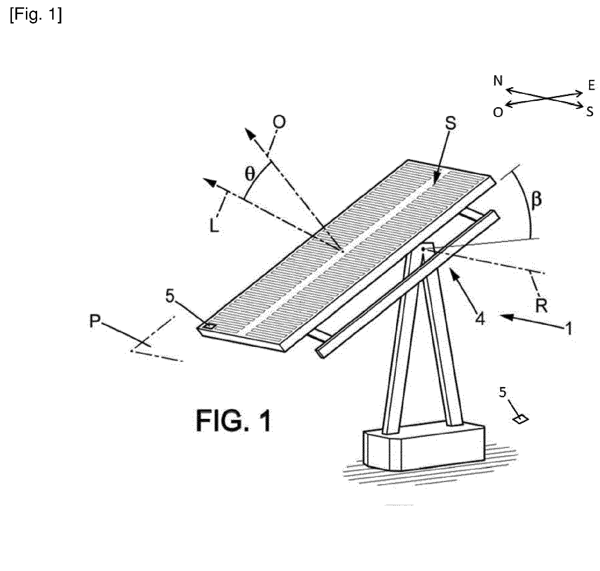

[Fig. 1] est une vue en perspective d'un panneau solaire utilisé dans l'invention ;

Fig. 2

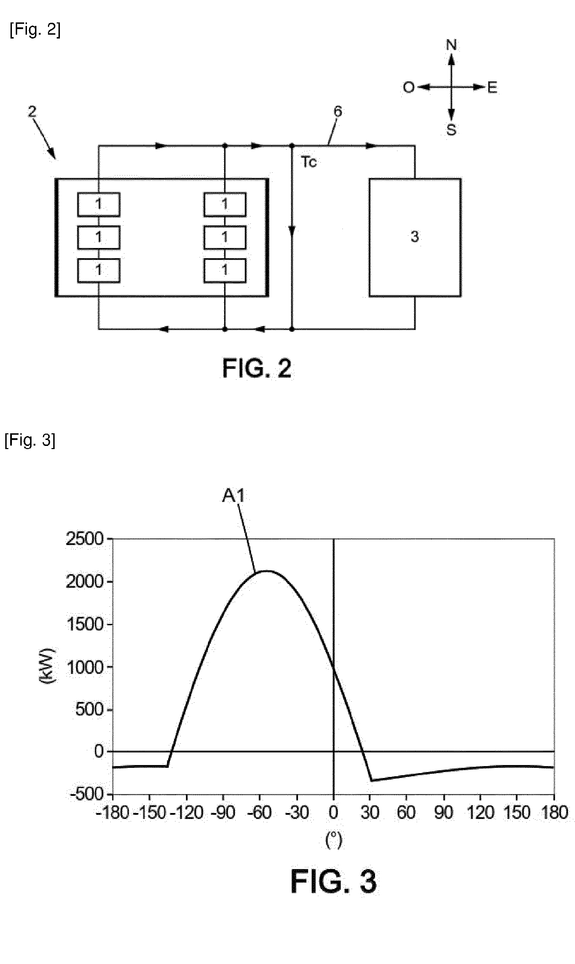

[Fig. 2] est un schéma simplifié représentant une centrale solaire thermique et une installation utilisés dans l'invention;

Fig. 3
[Fig. 3] est un graphique représentant la puissance générée par la centrale solaire thermique de la [Fig. 2] en fonction de l'angle d'inclinaison commandé des panneaux solaires dans des conditions d'ensoleillement données ;

**Fig. 4A**

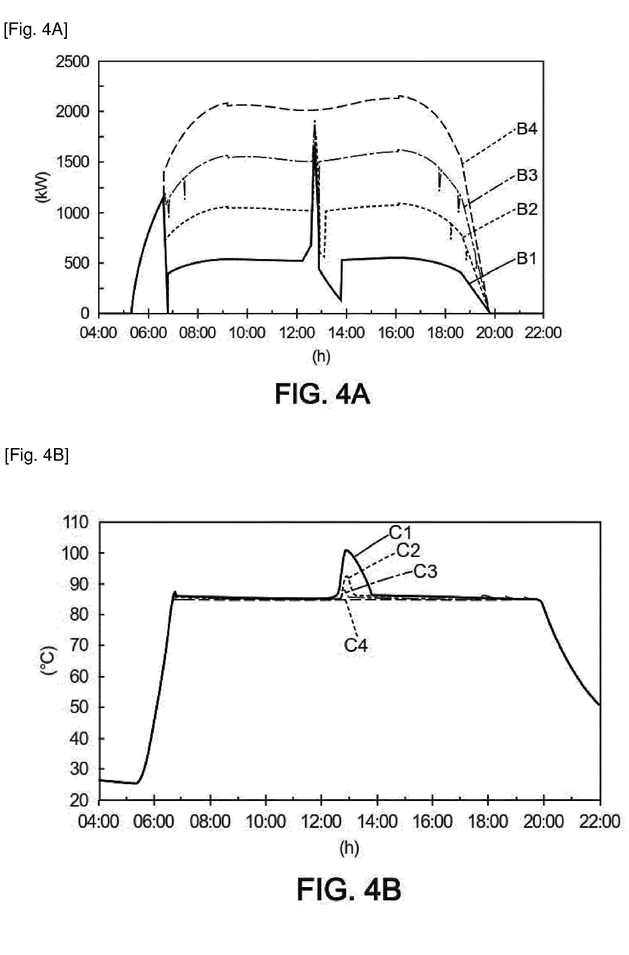

[Fig. 4A] est un graphique représentant, dans des conditions d'ensoleillement données, la puissance générée par une centrale solaire thermique de la [Fig. 2] au cours d'une journée selon quatre demandes de chaleur différentes d'une installation ;

**Fig. 4B**
[Fig. 4B] est un graphique représentant, dans des conditions d'ensoleillement données, la température obtenue par une centrale solaire thermique de la [Fig. 2] au cours d'une journée selon les quatre demandes de chaleur différentes d'une installation de la [Fig. 4A] ; et

**Fig. 4C**

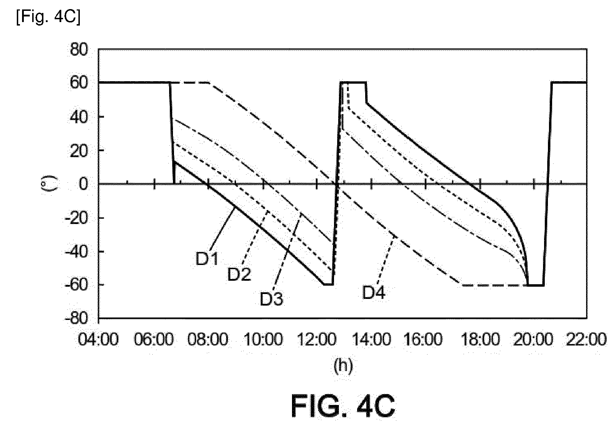

[Fig. 4C] est un graphique représentant, dans des conditions d'ensoleillement données, l'angle d'inclinaison commandé des panneaux solaires d'une centrale solaire thermique de la [Fig. 2] au cours d'une journée selon les quatre demandes de chaleur différentes d'une installation des [Fig. 4A] et [Fig. 4B].

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Sauf précision contraire, les expressions " approximativement ", " sensiblement ", " environ ", " de l'ordre de ", etc. signifient qu'une légère variation par rapport à la valeur nominale considérée est possible, notamment d'un pourcentage faible, en particulier à 10% près.

Par souci de clarté, seuls les étapes et éléments utiles à la compréhension des modes de réalisation décrits ont été détaillés.

## Description des modes de réalisation

### Panneau solaire

La [Fig. 1] est une vue en perspective d'un panneau solaire 1 d'une centrale solaire thermique 2 (appelé par la suite " centrale "). Comme illustré sur la [Fig.2], la centrale 2 est configurée pour alimenter en chaleur une installation 3. L'installation 3 peut être un site industriel, un réseau de chaleur urbain, ou encore tout autre structure. La centrale 2 comprend ainsi un circuit hydraulique 6 (comprenant des tuyaux, vannes, pompes, etc.) afin d'être relié à l'installation 3.

Un élément de stockage thermique (non illustré) peut être associé à la centrale 2.

Selon le mode de réalisation de la [Fig. 1], le panneau solaire 1 comprend une surface S. La surface S est avantageusement plane et s'étend dans un plan P. La surface S présente également un vecteur O normal au plan P.

Selon une réalisation, le panneau solaire 1 est un panneau plan vitré. Un panneau plan vitré est notamment différent d'un panneau solaire à concentration, ayant le plus souvent une forme cylindro-parabolique, et qui fonctionne selon une technique différente de concentration du rayonnement solaire sur un fluide caloporteur, lequel est localisé dans un tube.

On connait par exemple de tels panneaux plans sous les noms de marque " SAVO 15 SG " ou " SAVO 15 DG " par la société Savosolar, sous les noms " HT-HEATstore " ou " HT-HEATBoost " par la société Arcon Sunmark, et sous le nom " GK 31333 S " ou " GK 3133 " par la société GREENoneTEC.

L'irradiation de la surface S du panneau solaire 1 permet de chauffer un fluide caloporteur, tel que de l'eau, de l'eau glycolée, de la vapeur ou une huile thermique, par exemple disposé dans des tubes (non illustrés) situés sous la surface S à l'intérieur du panneau solaire 1. Le fluide caloporteur circule dans le circuit hydraulique 6 jusqu'à l'installation 3.

La centrale 2 comprend également un capteur d'ensoleillement 5. Au moins un capteur d'ensoleillement 5 est sur une surface horizontale par rapport au sol sur lequel sont disposés les panneaux solaires 1. En outre, selon le mode de réalisation de la [Fig. 1] et de façon optionnelle, le panneau solaire 1 peut également comprendre un capteur d'ensoleillement 5 situé sur la surface S d'un panneau solaire 1.

Le ou les capteurs d'ensoleillement 5 sont configurés pour fournir des mesures d'irradiation, et notamment une mesure de l'irradiance normale directe DNI (également appelée " Direct Normal Irradiance " en anglais) et une mesure de l'irradiance horizontale diffuse DHI (également appelée " Diffuse Horizontal Irradiance " en anglais).

La centrale 2 comprend également au moins un capteur de température ambiante extérieure, notamment disposé à l'ombre (non illustré). La centrale 2 comprend également au moins deux capteurs pour mesurer la température du fluide caloporteur dans le circuit hydraulique 6 respectivement en entrée et en sortie de la centrale 2 (non illustrés). La température, et notamment la température cible $T_c$, est ainsi mesurée en sortie de la centrale 2.

Le panneau solaire 1 comprend en outre un dispositif de suivi 4.

Le dispositif de suivi 4 est configuré pour faire pivoter, avantageusement de façon continue, le panneau solaire 1 selon au moins une direction de rotation R. Le dispositif de suivi peut notamment être un dispositif mécanique, de type vis sans fin ou crémaillère dentée.

Par " de façon continue ", on entend que le panneau solaire 1 pivote de façon graduelle, par exemple par pas angulaire inférieur ou égal à 2° (degrés), voire inférieure à 1°, voire inférieure à 0,5°.

Toutefois, ce mode de réalisation n'est pas limitatif et le dispositif de suivi 4 peut être configuré pour faire pivoter le panneau solaire 1 selon plusieurs directions de rotation, notamment deux directions de rotation avantageusement perpendiculaires l'une de l'autre.

Sur la [Fig. 1], le dispositif de suivi 4 est plus particulièrement configuré pour faire pivoter le panneau solaire 1 autour d'une seule direction de rotation R (également appelé " tracker 1-axe "). Le panneau solaire 1 peut ainsi être commandé pour pivoter d'un angle d'inclinaison β (exprimé par la suite en degré). L'angle d'inclinaison β peut par exemple varier dans une plage angulaire comprise entre [-60 : +60].

L'irradiance directe $G_b$ de la surface S du panneau solaire 1 est alors égale à :

[Math. 2]

$$G_b = DNI \cos \theta$$

DNI est l'irradiance normale directe et θ est l'angle d'incidence (exprimé par la suite en degré) formé entre le vecteur normal O et la direction des rayons lumineux L provenant directement du soleil.

Ainsi, l'irradiance directe $G_b$ de la surface S du panneau solaire 1 est maximale lorsque l'angle d'incidence θ est égal à 0, c'est-à-dire lorsque la direction des rayons lumineux L et le vecteur normal O sont colinéaires entre eux.

Comme illustré sur la [Fig. 2], la centrale 2 comprend avantageusement une pluralité de panneaux solaires 1 tels que décrit ci-dessus et illustrés sur la [Fig. 1]. Comme illustrés sur la [Fig. 1], les panneaux solaires 1 peuvent être connectés entre eux en série et/ou en parallèle au sein de la centrale 2.

Selon le mode de réalisation de la [Fig. 2], la centrale 2 comprend six panneaux solaires 1 répartis en deux séries. Cependant, ce mode de réalisation est purement illustratif et la centrale 2 peut évidemment comprendre un nombre bien plus élevé de panneaux solaires 1.

Les panneaux solaires 1 sont alors avantageusement disposés en rangées selon une direction nord-sud N/S. La direction de rotation R des dispositifs de suivi 4 des panneaux solaires 1 s'étend alors également selon cette direction nord-sud N/S, permettant ainsi d'orienter leurs surfaces S selon une direction est-ouest E/O au cours d'une journée.

En variante, et en fonction de la typologie du terrain sur lequel ils sont installés, les panneaux solaires 1 peuvent toutefois être disposés avec un décalage angulaire par rapport à la direction nord-sud N/S.

**Modulation de la puissance**

On décrit ci-après le procédé pour moduler la puissance générée P par une centrale 2 comprenant un ou plusieurs panneaux solaires 1. Les panneaux solaires pivotent avantageusement de façon simultanée d'un même angle d'inclinaison β. En variante, une partie seulement des panneaux solaires 1 pivotent selon un même angle d'inclinaison β, les autres panneaux pivotant selon un autre angle (non spécifié) ou restant immobiles.

Dans la suite, on décrit plus précisément les termes ou coefficients permettant de montrer la variation de la puissance générée P par la centrale 2 en fonction de l'angle d'inclinaison β. Certains autres termes ou coefficients indépendants de l'angle d'inclinaison β des panneaux solaires 1, mais dépendants éventuellement d'autres paramètres, ne sont pas explicités plus en détails.

Dans la suite, le calcul présenté correspond à des panneaux solaires 1 sous la forme de panneaux plans vitrés, plus particulièrement isotropes, le calcul étant sinon différent pour d'autres formes de capteurs solaires thermiques.

La puissance spécifique d'un panneau solaire 1 en régime établi est issue de la norme ISO 9806:2013 " Énergie solaire - Capteurs thermiques solaires - Méthodes d'essai ". Cette puissance est égale à :

[Math. 3]

$$\frac{Q}{A_G} = \eta_{0,b} \cdot K_b(\theta_L, \theta_T) \cdot G_b + \eta_{0,b} \cdot K_d \cdot G_d - c_6 \cdot u \cdot G - c_1 \cdot (\vartheta_m - \vartheta_a) - c_2 \cdot (\vartheta_m - \vartheta_a)^2 - c_3$$
$$\cdot u \cdot (\vartheta_m - \vartheta_a) + c_4 \cdot (E_L - \sigma \cdot T_a^4) - c_5 \cdot \frac{d\vartheta_m}{dt}$$

Q est la puissance utile " extraite " du panneau solaire 1

$A_G$ est la superficie hors-tout du panneau solaire 1 ;

L'irradiance directe $G_b$ se calcule selon l'expression [Math. 2] ci-dessus ;

$G_d$ est l'irradiance diffuse dans le plan du panneau solaire 1 ;

G est l'irradiance hémisphérique dans le plan du panneau solaire 1. $G = G_b + G_d$;

$E_L$ est l'irradiation de grandes longueurs d'ondes ($\lambda > 3 \ \mu m$);

$\vartheta_m$ est la température moyenne du fluide caloporteur au sein du panneau solaire 1,

en °C (degré Celsius). Le panneau solaire 1 est par la suite considéré dans un régime établi, de sorte que la dérivée temporelle de la température moyenne du fluide caloporteur est considérée comme nulle ;

$\vartheta_a$ est la température de l'air ambiant, en °C (degré Celsius) ;

$T_a$ est la température absolue de l'air ambiant, en K (Kelvin) ;

$\sigma$ est la constante de Stefan-Boltzmann ;

u est la vitesse de l'air environnant la centrale 2 ;

$\eta_{0,b}$ est le rendement de crête du panneau solaire 1 ($\eta_b$ à $\vartheta_m - \vartheta_a = 0$) fondé sur l'irradiance directe $G_b$;

$\theta_L$ est l'angle d'incidence longitudinal, c'est-à-dire l'angle formé par le vecteur normal O et la direction des rayons lumineux L projetée dans le plan longitudinal ; $\theta_T$ est l'angle d'incidence transversal : angle formé par la normale du plan du panneau solaire 1 et la direction des rayons lumineux L projetée dans le plan transversal ;

$K_b(\theta_L, \theta_T)$ est le facteur d'angle d'incidence pour l'irradiance directe $G_b$ et caractérise l'efficacité optique des panneaux solaires 1. Le facteur d'angle d'incidence $K_b(\theta_L, \theta_T)$ peut-être exprimé en fonction de l'angle d'incidence $\theta$. En effet, les composantes transversales et longitudinales du facteur d'angle d'incidence $K_b$ ne sont pas prises en compte, de sorte que seul le cas des panneaux solaires isotropes est considéré ;

$K_d$ est le facteur d'angle d'incidence pour l'irradiance diffuse $G_d$ ;

$C_1$ est le coefficient de perte thermique du panneau solaire 1 à ($\vartheta_m$ - $\vartheta_a$) = 0 ;

$C_2$ est l'effet de la température sur le coefficient de perte thermique ;

$C_3$ est l'effet du vent sur le coefficient de perte thermique ;

$C_4$ est l'effet de la température du ciel sur le coefficient de perte thermique ;

$C_5$ est la capacité thermique effective du ou des panneaux solaires 1 ; et

ce est l'effet du vent sur le rendement optique.

Afin d'exprimer la puissance P générée par une centrale 2 en régime établi par rapport à la puissance unitaire utile Q, les modèles suivants ont avantageusement été définis.

$A_p$ représente la surface hors-tout équivalente à l'ensemble des panneaux solaires 1 de la centrale 2.

[Math. 4]

$$A_p = N \times A_G$$

N est le nombre de panneaux solaires 1 de la centrale 2 et $A_G$ la surface hors-tout d'un panneau solaire 1.

$\eta_{ombre}$ est la fraction de la centrale 2 considérée comme étant ombragée, c'est-à-dire ne recevant pas d'irradiation solaire directe. La fraction $\eta_{ombre}$ est considérée dans la suite comme indépendante de l'angle d'inclinaison $\beta$.

$R_T$ est la résistance thermique de conduction équivalente au circuit hydraulique 6. Elle permet de caractériser les pertes thermiques statiques des tuyauteries de la centrale 2 (c'est-à-dire reliant les panneaux solaires 1 et l'installation 3).

La prise en considération de ces différents modèles permet d'exprimer la puissance P d'une centrale 2 en régime établi selon l'expression suivante :

[Math. 5]

$$P = A_p.\eta_{0,b}.\left(K_b(\theta).\eta_{ombre}.DNI\cos(\theta) + K_d.G_d\right) - A_p.c_6.u(DNI\cos(\theta) + G_d)$$

$$- \left(A_p.c_1 + \frac{1}{R_t}\right)(\vartheta_m - \vartheta_a) - A_p.c_2(\vartheta_m - \vartheta_a)^2 - A_p.c_3.u(\vartheta_m - \vartheta_a)$$

$$- A_p.c_4(E_L - \sigma.T_a^4)$$

Dans le cadre de la présente invention, les développements mathématiques ci-dessous ont été effectués à partir de l'expression [Math. 5] afin de caractériser la variation de la puissance P d'une centrale 2 en fonction de l'angle d'inclinaison β.

Ces développements mathématiques permettent avantageusement de simplifier le calcul de la puissance P tout en conservant une précision satisfaisante afin de déterminer le pilotage de la puissance de la centrale 2 uniquement en fonction de l'angle d'inclinaison β.

Le facteur d'angle d'incidence $K_b$ peut être exprimé selon l'expression suivante :

[Math. 6]

$$K_b = \max\left[0\;;1 - b_0\left(\frac{1}{\cos(\theta)} - 1\right)\right]$$

$b_0$ est une constante optique du panneau solaire 1.

Selon le modèle de Perez, l'irradiance diffuse $G_d$ peut être exprimée selon l'angle d'inclinaison β et des mesures d'irradiation dans le plan horizontal du sol fournies par le ou les capteurs d'ensoleillement 5 :

[Math. 7]

$$G_d = DHI\left[\left(\frac{1 + \cos(\beta)}{2}\right)(1 - F_1') + F_1'.\frac{a}{c} + F_2'sin(|\beta|)\right] + 0{,}2.GHI.\frac{1 - \cos(\beta)}{2}$$

L'irradiance horizontale diffuse DHI et l'irradiance horizontale globale GHI (également appelée " Global Horizontal Irradiance " en anglais) sont indépendants de l'angle d'incidence θ et de l'angle d'inclinaison β des panneaux solaires 1.

Les coefficients F1', F2' sont indépendants de l'angle d'inclinaison β et les valeurs sont tabulées selon le jour de l'année, la hauteur solaire He et la valeur de l'irradiance horizontale diffuse DHI.

Le rapport a/c est calculé selon l'expression suivante :

[Math. 8]

$$\frac{a}{c} = \frac{\max(0; \cos(\theta))}{\max(\cos(85°); \sin(He))}$$

He est la hauteur solaire indépendante de l'angle d'incidence θ et de l'angle d'inclinaison β.
L'irradiance horizontale globale GHI peut s'exprimer selon l'irradiance normale directe DNI et l'irradiance horizontale diffuse DHI selon l'expression suivante :

[Math. 9]

$$GHI = DNI.\sin(He) + DHI$$

L'irradiation $E_L$ résulte de la somme du flux des rayonnements atmosphériques $L_{in}$ et du flux des rayonnements infrarouges réfléchis par le sol $L_{up}$, tous deux mesurables et que l'on peut projeter dans le plan P des surfaces S des panneaux solaires 1, si l'on considère un ciel isotropique :

[Math. 10]

$$E_L = L_{in}\left(\frac{1+\cos(\beta)}{2}\right) + L_{up}\left(\frac{1-\cos(\beta)}{2}\right)$$

L'angle d'incidence θ peut être lui-même être exprimé en fonction de l'angle d'inclinaison β. Les panneaux solaires 1 sont considérés dans la suite comme s'étendant tous selon la direction nord/sud N/S.

[Math. 11]

$$\cos(\theta) = \cos(He)\cos(A_z + 90°)\sin(\beta) + \cos(\beta)\sin(He)$$

$A_z$ est l'azimut solaire.
Finalement, le procédé selon l'invention permet d'exprimer la puissance générée P par la centrale 2 uniquement en fonction de l'angle d'inclinaison β, selon l'expression :

[Math. 12]

$$P = k_c \cos(\beta) + k_s \sin(\beta) + k_k$$

[Math. 13]

$$k_c = A_p \left[ k_1 . DHI \left( \frac{1 - F_1'}{2} \right) - k_1 . GHI \frac{0,2}{2} + k_2 + k_3 \sin(He) \right]$$

[Math. 14]

$$k_s = A_p \left[ k_1 . DHI . F_2' \left( \frac{|\beta|}{\beta} \right) + k_3 \cos(He) \cos\left(Az + 90°\right) \right]$$

[Math. 15]

$$k_k = A_p \left[ k_0 - DNI.b_o . \eta_{o,b} . \eta_{ombre} + k_1 . DHI \left( \frac{1 - F_1'}{2} \right) + k_1 . GHI \frac{0,2}{2} \right]$$

Cette expression n'est toutefois valable que pour l'angle d'inclinaison $\beta$ compris entre [-90 : +90] et $\theta$ compris entre [0 : +90].

Cette loi de puissance dépend évidemment d'autres paramètres, notamment des conditions météorologiques et de la configuration de la centrale 2.

Les valeurs d'irradiation prises en compte dans la loi de puissance sont plus particulièrement mesurées par le ou les capteurs d'ensoleillement 5 en temps réel. Ces valeurs sont donc prises en compte dans la détermination de l'angle d'inclinaison.

La puissance maximale $P_{max}$ pouvant être générée par la centrale 2 peut ainsi être déterminée par la valeur de l'angle d'inclinaison $P_{max}$. La puissance maximale $P_{max}$ dépend de la ressource solaire disponible à un instant donné.

Entre les valeurs de puissance maximale $P_{max}$ et minimale $P_{min}$, il est possible d'adapter, avantageusement en temps réel, la puissance thermique produite par la centrale 2 en déterminant l'angle d'inclinaison $\beta$ permettant d'obtenir la puissance P souhaitée.

Par " en temps réel ", on comprend en particulier que la puissance générée P par la centrale 2 peut être modifiée, en particulier à partir de la loi de puissance, selon une période inférieure à 30 minutes, voire inférieure à 5 minutes, voire inférieure à 1 minute, voire inférieure à 10 secondes.

On définit par exemple la puissance générée P comme une fraction $f_{mod}$ (exprimée en %) de la puissance maximale $P_{max}$ :

[Math. 16]

$$P = f_{mod} \times P_{max}$$

**Exemples de simulation**

La [Fig. 3] illustre un exemple de puissance générée P par une centrale 2 en fonction de l'angle d'inclinaison $\beta$ des panneaux solaires 1 (courbe A1). Cette puissance générée P est représentée à un instant défini de la journée en considérant que les paramètres autres que l'angle d'inclinaison $\beta$, telles que les données météorologiques ou topologiques, sont connues.

On remarque que la puissance maximale $P_{max}$ de la centrale 2 est égale à 2000 kW et correspond à un angle d'inclinaison β de -58°.

Si l'on souhaite générer une puissance P égale à 75% de la puissance maximale $P_{max}$, à savoir une puissance P égale à 1500 kW, deux angles d'inclinaison β des panneaux solaires 1 sont possibles, à savoir -90° et -15°. Toutefois un seul angle d'inclinaison β est compris dans la plage angulaire accessible des panneaux solaires 1, de sorte que l'angle d'inclinaison β devra être égal à -15°.

On remarque également qu'au-delà de certaines valeurs d'angle d'inclinaison β, la puissance générée P par la centrale 2 est négative car l'irradiation des surfaces S des panneaux solaires 1 ne permet plus de compenser les pertes thermiques et radiatives de la centrale 2. Cela entraine alors une baisse de température du fluide caloporteur.

Les [Fig. 4A], [Fig. 4B] et [Fig. 4C] illustrent respectivement la puissance générée P, la température T de la centrale 2 et l'angle d'inclinaison β des panneaux solaires 1 au cours d'une journée (exprimée en 24h) selon quatre simulations différentes. Ces quatre simulations correspondent toutes à la mise en oeuvre d'une centrale fictive de puissance maximale $P_{max}$ de l'ordre de 2,4 MW, située à Marseille (France) et fonctionnant en régime nominal autour d'une température consigne d'environ 80/90 °C (degrés Celsius). La centrale 2 comprend une surface S cumulée de panneaux solaires 1 égale à 3000 m$^2$, l'angle d'inclinaison β des panneaux solaires 1 pouvant varier entre [-60 : +60].

Dans ces quatre simulations, on souhaite que la centrale 2 atteigne rapidement la température consigne T puis maintienne cette température consigne T tout au long de la journée. Les simulations visent chacune une température consigne T correspondant à une puissance générée P égale respectivement à 25% (correspondant aux courbes B1, C1 et D1), 50% (correspondant aux courbes B2, C2 et D2), 75% (correspondant aux courbes B3, C3 et D3) et 100% (correspondant aux courbes B4, C4 et D4) de la puissance maximale $P_{max}$ de la centrale 2.

La phase de préchauffage étant commune aux quatre simulations, la température consigne est atteinte vers 07:00h. On remarque ainsi sur la [Fig. 4A] que les courbes B1-B4 des quatre simulations sont confondues jusqu'à ce que cette température consigne soit atteinte. La puissance générée selon chaque simulation permet ensuite de maintenir de façon satisfaisante cette température consigne en fonction de la puissance thermique respective à fournir à l'installation 3.

Les courbes B1-B3 présentent un pic autour de 13:00h correspondant à un retournement angulaire des panneaux solaires 1 pour obtenir une valeur d'angle d'inclinaison β restant dans la plage angulaire accessible. Ce retournement est plus particulièrement visible sur la [Fig. 4C] (courbes D1-D3).

Ce retournement entraine de façon temporaire une irradiation maximale des panneaux solaires 1. Ce retournement angulaire conduit ainsi à une puissance générée temporairement plus élevée que celle demandée (courbes B1-B3) et à une élévation temporaire de la température au-delà de la température consigne (courbes C1-C3). Suite au retournement, une phase de régulation mettant en oeuvre un refroidissement de la centrale 2 permet de ramener la température au niveau de la température consigne pour chaque simulation. En particulier, la température est ensuite de nouveau stabilisée autour de la valeur consigne avant de pouvoir reprendre la modulation de puissance fournie selon le niveau de puissance demandé.

**Avantages**

Comme indiqué précédemment, la modulation de la puissance générée P par la centrale 2 est obtenue en optimisant l'angle d'inclinaison β des panneaux solaires 1 selon la loi de puissance.

Bien évidemment, la précision des valeurs d'angle d'inclinaison β ainsi déterminée dépend de la loi de puissance modélisée, et notamment des approximations qui ont été effectuées et du nombre de paramètres qui ont été pris en compte.

Il est ainsi possible d'adapter en temps réel la puissance générée P en fonction de la puissance thermique à fournir à l'installation 3 tout en maintenant une température consigne déterminée.

Contrairement à la solution de l'état de la technique, le procédé de la présente invention permet de supprimer tout retard dans la modulation de la puissance thermique généré par l'installation en déterminant l'angle d'inclinaison β directement à partir de la loi de puissance thermique modélisée et à partir de l'irradiation mesurée en temps réel par les capteurs d'ensoleillement et non à partir de la puissance thermique mesurée résultante de l'irradiation.

Cela a pour avantage de permettre un meilleur dimensionnement de la capacité de la centrale 2.

En effet, afin de maximiser la puissance générée dans les centrales actuelles, on connait déjà des dispositifs de suivi 4 de panneaux solaires 1 utilisés pour suivre la course théorique du soleil d'Est en Ouest selon un axe de rotation Nord-Sud. Par exemple, si les dispositifs de suivi 4 sont positionnés de façon optimisée, la composante transversale des rayons lumineux L sur les surfaces S des panneaux solaires 1 est alors annulée. La puissance générée par la centrale 2 est alors théoriquement maximisée par la minimisation de l'angle d'incidence θ tout au long de la journée.

Toutefois, si la capacité de la centrale est surdimensionnée, et notamment si la puissance maximale de la centrale est trop importante à certains moments par rapport à la puissance thermique à fournir à l'installation 3, il se produit une surchauffe de la centrale.

Grâce au procédé de modulation selon l'invention, il est possible de surdimensionner la capacité de la centrale 2 sans risquer de surchauffe. La centrale 2 étant de grande capacité, celle-ci peut produire de la chaleur de façon économique et suffisante, tout en modulant ponctuellement la puissance générée si nécessaire, et en particulier en cas de faible puissance thermique à fournir.

En outre, il n'est alors plus nécessaire d'avoir recours à un stockage de chaleur additionnel ou à toute autre solution technique de gestion des surchauffes.

En cas de surchauffe, l'angle d'inclinaison β peut être adapté afin de limiter l'irradiation des panneaux solaires 1 et ainsi diminuer la puissance générée.

Bien évidemment, l'invention n'est pas limitée aux modes de réalisation décrits précédemment et fournis uniquement à titre d'exemple.

**Revendications**

1. Procédé pour moduler une puissance générée (P) par une centrale solaire thermique (2) comprenant au moins un panneau solaire (1), le procédé comprenant les étapes suivantes :

   - on dispose d'au moins un panneau solaire (1) comprenant un dispositif de suivi (4) configuré pour faire pivoter le panneau solaire (1) selon au moins une direction de rotation (R) ;
   - on dispose d'une installation (3) à fournir en une puissance thermique variable au cours du temps à partir de l'irradiation reçue par le panneau solaire (1) ;
   - on détermine un angle d'inclinaison (β) du panneau solaire (1) pour produire la puissance thermique à fournir à l'installation (3) à partir de l'irradiation mesurée en temps réel ; et
   - on pivote le panneau solaire (1) avec le dispositif de suivi (4) pour atteindre l'angle d'inclinaison (β) déterminé.

2. Procédé selon la revendication 1, dans lequel on détermine en temps réel l'angle d'inclinaison (β) du panneau solaire (1) pour produire la puissance thermique à fournir à l'installation (3).

3. Procédé selon l'une quelconque des revendications précédentes, dans lequel on pivote de façon continue, notamment au cours d'une journée, le panneau solaire (1) avec le dispositif de suivi (4) pour atteindre l'angle d'inclinaison (β) déterminé.

4. Procédé selon l'une quelconque des revendications précédentes, dans lequel on détermine l'angle d'inclinaison (β) du panneau solaire (1) pour générer une puissance (P) correspondant à la puissance thermique à fournir à l'installation (3) dans la limite de la puissance solaire disponible, à partir d'une loi de puissance s'écrivant sous la forme :

$$P = k_c \cos(\beta) + k_s \sin(\beta) + k_k$$

dans laquelle $k_c$, $k_s$, $k_k$ sont des coefficients indépendants de l'angle d'inclinaison.

5. Procédé selon l'une quelconque des revendications précédentes, dans lequel la centrale solaire thermique (2) comprend un fluide caloporteur configuré pour transporter une puissance thermique à fournir à l'installation (3), et dans lequel on pivote le panneau solaire (1) avec le dispositif de suivi (4) de sorte que la température du fluide caloporteur soit maintenue en dessous d'une température cible déterminée.

**Patentansprüche**

1. Verfahren zur Modulation einer von einem solarthermischen Kraftwerk (2) mit wenigstens einem Solarmodul (1) erzeugten Leistung (P), wobei das Verfahren die folgenden Schritte umfasst:

   - Vorsehen wenigstens eines Solarmoduls (1) mit einer Nachführvorrichtung (4), die dazu ausgebildet ist, das Solarmodul (1) in wenigstens einer Drehrichtung (R) zu schwenken;
   - Vorsehen einer Anlage (3) zur Bereitstellung einer zeitlich variablen Wärmeleistung aus der von dem Solarmodul (1) empfangenen Strahlung;
   - Bestimmen eines Neigungswinkels (β) des Solarmoduls (1), um die der Anlage (3) zuzuführende thermische Leistung aus der in Echtzeit gemessenen Einstrahlung zu erzeugen; und

- Schwenken des Solarmoduls (1) mit der Nachführvorrichtung (4), um den bestimmten Neigungswinkel ($\beta$) zu erreichen.

**2.** Verfahren nach Anspruch 1, wobei der Neigungswinkel ($\beta$) des Solarmoduls (1) zur Erzeugung der an die Anlage (3) abzugebenden Wärmeleistung in Echtzeit bestimmt wird.

**3.** Verfahren nach einem der vorhergehenden Ansprüche, wobei das Solarmodul (1) mit der Nachführeinrichtung (4) kontinuierlich, insbesondere im Laufe eines Tages, gedreht wird, um den bestimmten Neigungswinkel ($\beta$) zu erreichen.

**4.** Verfahren nach einem der vorhergehenden Ansprüche, wobei der Neigungswinkel ($\beta$) des Solarmoduls (1) bestimmt wird, um eine Leistung (P) zu erzeugen, die der an die Anlage (3) abzugebenden thermischen Leistung innerhalb der Grenze der verfügbaren Solarleistung entspricht, ausgehend von einem Leistungsgesetz in der Form :

$$P = k_c \cos(\beta) + k_s \sin(\beta) + k_k$$

wobei $k_c$, $k_s$, $k_k$ Koeffizienten sind, die vom Neigungswinkel unabhängig sind.

**5.** Verfahren nach einem der vorhergehenden Ansprüche, wobei das solarthermische Kraftwerk (2) eine Wärmeträgerflüssigkeit umfasst, die dazu ausgebildet ist, die an die Anlage (3) abzugebende thermische Leistung zu transportieren, und wobei das Solarmodul (1) mit der Nachführeinrichtung (4) derart geschwenkt wird, dass die Temperatur der Wärmeträgerflüssigkeit unterhalb einer bestimmten Zieltemperatur gehalten wird.

**Claims**

**1.** A method for modulating a power generated (P) by a thermal solar power plant (2) comprising at least one solar panel (1), the method comprising the following steps:

- at least one solar panel (1) is available, comprising a tracking device (4) configured to rotate the solar panel (1) in at least one direction of rotation (R);
- an installation (3) is available, to provide a variable thermal power over time from the irradiation received by the solar panel (1);
- an angle of inclination (B) of the solar panel (1) is determined, to produce the thermal power to be provided to the installation (3) from the irradiation measured in real time; and
- the solar panel (1) is rotated with the tracking device (4) to reach the determined angle of inclination (B).

**2.** The method according to claim 1, wherein the angle of inclination (B) of the solar panel (1) is determined in real time to produce the thermal power to be provided to the installation (3).

**3.** The method according to any one of the preceding claims, wherein the solar panel (1) is pivoted continuously, in particular during a day with the tracking device (4) to reach the determined angle of inclination (B).

**4.** The method according to any one of the preceding claims, wherein the angle of inclination (B) of the solar panel (1) is determined in order to generate a power (P) corresponding to the thermal power to be provided to the installation (3) within the limit of the available solar power, from a power law written in the form:

$$P = k_c \, cos(\beta) + k_s \, sin(\beta) + k_k$$

wherein $k_c$, $k_s$, $k_k$ are independent coefficients of the angle of inclination.

**5.** The method according to any one of the preceding claims, wherein the thermal solar power plant (2) comprises a heat transfer fluid configured to transport a thermal power to be provided to the installation (3), and wherein the solar panel (1) is rotated with the tracking device (4) such that the temperature of the heat transfer fluid is maintained below a determined target temperature.

[Fig. 1]

FIG. 1

[Fig. 2]

**FIG. 2**

[Fig. 3]

**FIG. 3**

[Fig. 4A]

FIG. 4A

[Fig. 4B]

FIG. 4B

[Fig. 4C]

FIG. 4C

**EP 3 671 062 B1**

## RÉFÉRENCES CITÉES DANS LA DESCRIPTION

### Documents brevets cités dans la description

- WO 2015155771 A

- FR 2910600